# EUROPÄISCHE PATENTSCHRIFT

(11) **EP 2 845 965 B1**
(45) Veröffentlichungstag und Bekanntmachung des Hinweises auf die Patenterteilung: **14.06.2017**
(21) Anmeldenummer: 14002777.2
(22) Anmeldetag: 08.08.2014
(51) Int. Cl.: E04F 15/04, F16B 5/00, F16B 5/02

(54) **Befestigung von Bohlen an einer Unterkonstruktion**
Mounting of planks to a substructure
Fixation d'un madrier sur une infrastructure

(30) Priorität: 12.08.2013 AT 2622013 U
(43) Veröffentlichungstag der Anmeldung: 11.03.2015
(73) Patentinhaber: SIHGA GmbH, 4694 Ohlsdorf (AT)
(72) Erfinder: Simmer, Jane-Beryl, 4810 Gmunden (AT)

(56) Entgegenhaltungen:
- EP-A1- 1 207 246
- EP-A1- 1 892 353
- EP-A2- 2 078 804
- DE-U1- 20 103 048
- DE-U1-202010 013 171
- KR-B1- 100 858 887

## Beschreibung

Die Erfindung betrifft die Befestigung von Bohlen an einer Unterkonstruktion. Der wichtigste Anwendungsfall dafür ist die Bildung von bodenartigen Abdeckungen im Freien, beispielsweise Terrassenabdeckungen. Der nächstliegende Stand der Technik DE 20 2010 013171 U1 offenbart die Verwendung von Befestigungsteilen zur Befestigung von Bohlen an einer Unterkonstruktion nach dem Oberbegriff des Hauptanspruchs.

Bohlen in diesem Sinne sind Stäbe, Profile oder langgestreckte Bretter, welche typischerweise aus Holz bestehen aber auch aus Holz-Kunststoffmischungen oder ganz aus Kunststoff bestehen können. Zur Bildung einer Abdeckung werden sie mit kleinem seitlichem Abstand parallel zueinander auf einer Unterkonstruktion befestigt. Die Unterkonstruktion liegt typischerweise als Querlattung vor.

Eine gängige Methode die Bohlen an der Unterkonstruktion zu befestigen ist die, sie durch eine Schraube oder einen Nagel von der Oberseite der Bohlen her anzuschrauben, oder anzunageln. Vorteilhaft an dieser Methode ist, dass sie einfach anzuwenden ist und dass außer Schrauben bzw. Nägeln keine Befestigungsteile erforderlich sind. Nachteile sind die störende Sichtbarkeit der Köpfe der Befestigungsteile und dass die Bohlen direkt an der Unterkonstruktion anliegen, wodurch sich dort kriechende Feuchtigkeit lange halten und damit zerstörerisch wirken kann. Ein weiterer wesentlicher Nachteil liegt in der fehlenden Möglichkeit, das wärme- und feuchtigkeitsbedingte Quell- und Schwindverhalten der Bohlen ausgleichen zu können.

Die Schriften DE 202008010795 U1, US 4296580 A, US 4844651 A, US 3047985 A, WO8600361 A1 und DE 10230797 C2 zeigen Bohlenbefestigungen bei denen sich Befestigungsteile an der Unterkonstruktion jeweils unter zwei benachbarte Bohlen erstrecken, wobei jeder Befestigungsteil mit einer der beiden Bohlen durch eine Schraube verbunden ist, welche sich durch den Befestigungsteil hindurch von deren Unterseite her in die Bohle hinein erstreckt. Entlang der einen Längsseite einer Bohle sind die unter dieser Bohle hervorragenden Längsbereiche der mit der Bohle verschraubten Befestigungsteile zusätzlich mit der Unterkonstruktion verschraubt. (Anstelle von Schrauben können auch Nägel verwendet werden.) An der zweiten Längsseite der Bohle sind die unter dieser Bohle hervorragenden Längsbereiche der mit der Bohle verschraubten Befestigungsteile nur in den Spalt zwischen Unterkonstruktion und benachbarter Bohle hineingesteckt und so durch die benachbarte Bohle gegen das Wegheben von der Unterkonstruktion gehalten. Sofern bei der Montage zumindest ein kleiner Spalt zwischen benachbarten Bohlen gelassen wurde, können die Bohlen damit quer zu ihrer Längsrichtung parallel zur Bodenebene ungehindert quellen und schwinden. Dabei nimmt die Einstecktiefe der Befestigungsteile an einer Längsseite einer Bohle unter die benachbarte Bohle zu- bzw. ab und alle Bohlen bleiben immer parallel zueinander. Problematisch ist, dass die Halterungen an einer Längsseite jeder Bohle mit der Zeit auch ein vertikales Spiel bekommen. Bei einzelnen der genannten Bauweisen behilft man sich, indem von den Befestigungsteilen aus auch Spieße in die Längsseitenflächen der Bohlen eingesteckt werden. Weiters ist problematisch, dass für den Austausch einer einzigen Bohle alle Bohlen von einem Rand der Bodenfläche her demontiert werden müssen.

Die Schriften EP 2415946 A2, WO 2007051214 A1, DE 29823195 U1 und EP 2096232 A1 zeigen Bohlenbefestigungen wobei Befestigungsteile von der Unterkonstruktion aus in den Spalt zwischen benachbarten Bohlen ragen und mit Fortsätzen in einer Nut an den angrenzenden Längsseitenflächen der Bohlen anliegen. Quell- und Schwindverhalten der Bohlen wird bestimmungsgemäß nur dadurch ausgeglichen, dass die Befestigungsteile in eingebautem Zustand unter starker elastischer Vorspannung an den Bohlen anliegen und durch das Quellen bzw. Schwinden weiter oder weniger weit elastisch verformt werden. Problematisch ist, dass das Aufbringen der notwendigen parallel zur Bodenebene ausgerichteten elastischen Vorspannung den Montagevorgang erschwert und dass die elastische Verformbarkeit von Befestigungsteilen und Bohlen im Lauf der Zeit nachlässt und damit in manchen Fällen nicht mehr ausreicht um die Bohlen spielfrei zu halten.

Auch die Schriften DE 202007003181 U1, EP 1700966 A1, EP 1892353 A1, DE 19820137 A1, DE 29507264 U1, DE 60007944 T2, DE 202006006672 U1, WO 2007137316 A1, DE 102004061437 B4 und DE 202008001033 U1 zeigen Bohlenbefestigungen bei denen Befestigungsteile von der Unterkonstruktion aus in den Spalt zwischen benachbarten Bohlen ragen und mit Fortsätzen in einer Nut an den angrenzenden Längsseitenflächen der Bohlen anliegen. Quell- und Schwindverhalten der Bohlen wird bestimmungsgemäß dadurch ausgeglichen, dass die in besagten Nuten anliegenden Teile der Befestigungsteile an der unteren Nutflanke, an der sie auf Druck anliegen, abgleiten können. Mit Ausnahme der Befestigungen gemäß den beiden letztgenannten dieser Schriften sind die Befestigungsteile mit der Unterkonstruktion durch Nägel oder Schrauben verbunden, welche in der Symmetrieebene des Spaltes zwischen benachbarten Bohlen durch die Befestigungsteile hindurch in die Unterkonstruktion hinein verlaufen. Die Bauweise ist gut montier- und demontierbar; auch beim Austausch einzelner Bohlen brauchen nicht alle Bohlen von einem Rand der Bodenfläche her gelöst zu werden. Zu Problemen führt, dass an zwei Befestigungsbeschlägen, welche an unterschiedlichen Längsseitenflächen des gleichen Längsbereiches einer Bohle angeordnet sind, nicht definiert ist, an welchem Befestigungsbeschlag die Bohle beim Quellen bzw. Schwinden wie viel gleitet. Häufig führt das dazu, dass nach einigen Quell- und Schwindzyklen benachbarte Bohlen sichtlich nicht mehr ganz parallel zueinander liegen und dass manche direkt zueinander benachbarte Bohlen sichtlich näher aneinander liegen als andere direkt zueinander benachbarte Bohlen.

Die DE 102 39 146 B4 zeigt ein Wand- oder Deckenverkleidung für Innenräume, welche durch einzelne rechteckige, seitlich aneinander anliegende Paneele gebildet wird. In einem Abstand von der Sichtseite eines Paneels ist in die einzelnen Stirnflächen eine Nut eingefräst. An jeder zweiten Stirnfläche ist der der Unterkonstruktion zugewandte Teil der Stirnfläche, welcher besagte Nut zur Unterkonstruktion hin begrenzt, gegenüber der Sichtseite zurückgesetzt. Wenn zwei Paneele bestimmungsgemäß aneinander anliegen, bilden die Sichtseiten somit eine geschlossene Fläche unter welcher sich an den Stoßlinien zweier Paneele ein Profilhohlraum mit T-förmiger Querschnittsfläche erstreckt, wobei die Fußfläche des T an der Unterkonstruktion liegt. In dem Profilhohlraum sind Befestigungsteile mit T-förmiger Querschnittsfläche angeordnet, wobei der Quersteg des T in Nuten benachbarter Paneele ragt und der (breite) Mittelsteg zur Unterkonstruktion hin ragt und mit dieser durch Schrauben verbunden ist. An einer Seite weist der Quersteg eines Befestigungsteils in einen Abstand zum Mittelsteg einen parallel zum Mittelsteg ausgerichteten kurzen Vorsprung auf, welcher bei montiertem Befestigungsteil in eine Rille in einer Flanke einer Nut eines Paneels ragt, womit zwischen Befestigungsteil und Paneel eine teilweise formschlüssige Verbindung hergestellt ist. Bestimmungsgemäß wird damit eine ansonsten erforderliche Verleimung zwischen Befestigungsteil und Paneel eingespart. Die Problematik des Quellens und Schwindens wird in der Schrift nicht thematisiert; vermutlich ist das auch kein Problem, da die Paneele für Innenräume vorgesehen sind, in denen das Material bestimmungsgemäß nur relativ wenigen und geringen Temperatur- und Feuchteschwankungen ausgesetzt ist.

Von diesem Stand der Technik ausgehend hat sich der Erfinder die Aufgabe gestellt, eine Befestigung für Bohlen an einer Unterkonstruktion zu schaffen, wobei keine Befestigungsteile an die Sichtseite der Bohlen ragen sollen, wobei die Befestigung leicht herzustellen und auch partiell zu lösen und wiederherzustellen sein soll und wobei die Befestigung auch über viele Zyklen von Quellen und Schwinden der Bohlen spielfrei halten soll. Gegenüber Befestigungen die diese Aufgabe schon erfüllen, soll die zu schaffende Befestigung dahingehend besser sein, dass die Bohlen auch nach vielen Quell- und Schwindzyklen sicher parallel und in unverändertem Mittenabstand zueinander liegen sollen.

Für das Lösen der Aufgabe wird von jener Bauweise ausgegangen, gemäß welcher Befestigungsteile von der Unterkonstruktion aus in den Spalt zwischen benachbarten Bohlen ragen und mit einem Quersteg in einer Nut an den angrenzenden Längsseitenflächen der Bohlen anliegen, wobei Quell- und Schwindverhalten der Bohlen bestimmungsgemäß dadurch ausgeglichen wird, dass der in besagten Nuten anliegenden Teil des Quersteges an der unteren Nutflanke, an welcher er auf Druck anliegt, abgleiten kann und wobei die Befestigungsteile mit der Unterkonstruktion durch Nägel oder Schrauben verbunden sind, welche im Spalt zwischen benachbarten Bohlen durch die Befestigungsteile hindurch verlaufen und in die Unterkonstruktion hinein verlaufen.

Als erfindungsgemäße Verbesserung dazu wird vorgeschlagen, eine zusätzliche Verbindungsstelle zwischen Befestigungsteilen und einer der beiden Bohlen an denen die Befestigungsteile jeweils anliegen vorzusehen, wobei die zusätzliche Verbindungsstelle an der Unterseite besagter Bohle liegt und derart ausgelegt ist, dass an ihr Relativbewegung in der Bodenebene quer zur Längsrichtung der Bohle zwischen Bohle und Befestigungsteil blockiert ist.

Durch diese zusätzliche Maßnahme wird an Vorteil erreicht, dass eine Seite der Querschnittsfläche der Bohlen beim Quellen und Schwinden gegenüber der Unterkonstruktion immer unbewegt bleibt. Damit kann es zu keinen unkontrollierten Verschiebungen von Bohlen gegenüber der Unterkonstruktion kommen.

Die Erfindung wird an Hand von Zeichnungen zu beispielhaften Ausführungsformen veranschaulicht:
Fig. 1: zeigt eine erste erfindungsgemäße Befestigung in seitlicher Schnittansicht.
Fig. 2: zeigt den Befestigungsteil von Fig. 1 gegenüber Fig. 1 etwas vergrößert in Draufsicht.
Fig. 3: zeigt eine zweite erfindungsgemäße Befestigung in seitlicher Schnittansicht.

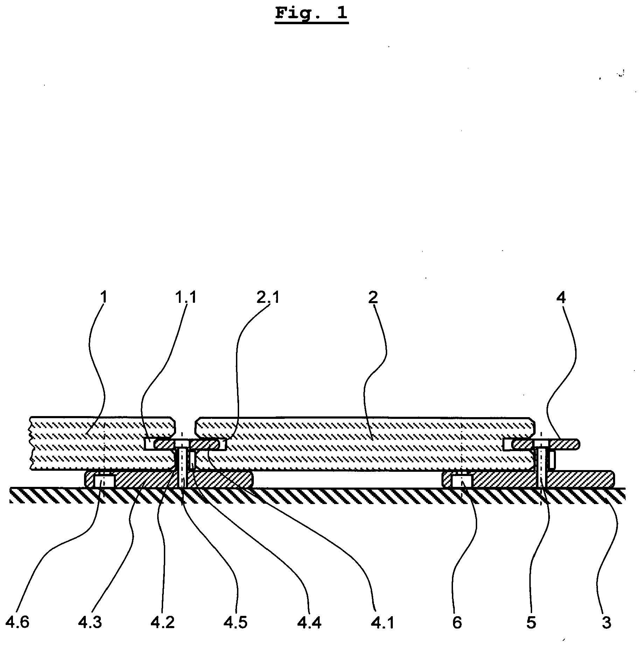

Gemäß Fig. 1 werden Bohlen 1, 2 mittels Befestigungsteilen 4 an einer Unterkonstruktion 3 fixiert.

Ein Befestigungsteil 4 hat annähernd die Form eines kurzen I-Profilstücks und weist einen horizontalen Quersteg 4.1, einen horizontalen Bodenteil 4.3 und einem vertikalen Verbindungssteg 4.2 auf.

In montiertem Zustand ragen die beidseits vom Verbindungssteg 4.2 wegstehenden Teile des Quersteges 4.1 in jeweils eine Nut 1.1, 2.1 an einer Längsseitenflächen der zu befestigenden Bohlen 1, 2. Der Bodenteil 4.3 erstreckt sich zwischen der Unterkonstruktion 3 und den einander zugewandten Randbereichen der unteren Flächen beider benachbarten Bohlen 1, 2, sodass also die Bohlen 1, 2 mit Randbereichen ihrer unteren Fläche am Bodenteil 4.3 aufliegen. Der Verbindungssteg 4.2 erstreckt sich im Spalt zwischen den beiden Bohlen 1, 2 vom Bodenteil 4.3 zum Quersteg 4.2. Der Verbindungssteg 4.2 ist durch mindestens eine vertikale Durchgangsbohrung 4.5 durchbrochen, durch welche eine Schraube 5 hindurch in das Material der Unterkonstruktion 3 hinein verläuft.

Die im nachfolgenden Absatz verwendeten Positionsnummern beziehen sich auf die Befestigung am linken Befestigungsteil 4 in Fig. 1: An einem vom Verbindungssteg 4.2 entfernt liegenden Bereich des Bodenteils 4.3 ist der Bodenteil 4.3 durch eine vertikal verlaufende Durchgangsbohrung 4.6 durchbrochen und durch diese Durchgangsbohrung hindurch verläuft eine Schraube 6 von unten in das Material der darüber befindlichen Bohle 1 hinein. Damit ist an der Schraube 6 die eine Bohle 1 der beiden am Bodenteil 4.3 aufliegenden Bohlen 1, 2 so fix mit dem Befestigungsteil 4 verbunden, dass dort keinerlei Relativverschiebung zwischen Befestigungsteil 4 und Bohle 1 möglich ist. Die zweite Bohle 2 an welcher der Befestigungsteil 4 anliegt, ist mit diesem Befestigungsteil 4 nicht durch eine Schraube verbunden. Im Fall des Quellens oder Schwindens der Bohle 2 kann diese an dem starr an der Unterkonstruktion 3 gehaltenen Befestigungsteil 4 parallel zur Unterkonstruktion unter Überwindung von Reibungskräften gleiten. Für die bestimmungsgemäße Funktion ist auch wichtig, dass die Nut 2.1 an der Bohle 2 tiefer ist als der Quersteg 4.1 vom Verbindungssteg 4.2 Richtung Bohle 2 hin weg kragt.

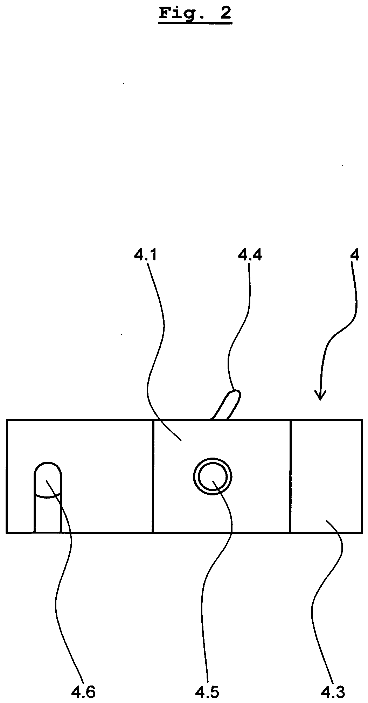

Der Montagevorgang von Bohlen und Befestigungsteilen gemäß Fig. 1 und Fig. 2 weist am besten folgende wiederkehrende Arbeitsschrittfolge auf:
a) Befestigungsteile 4 werden an einer Längsseitenfläche einer Bohle 1, 2 aufgesteckt, sodass jene Seite des Bodenteils 4.3 der Befestigungsteile, an welcher sich die Durchgangsbohrung 4.6 befindet, an der Unterseite der Bohle 1, 2 anliegt und dass der Verbindungssteg 4.2 des Befestigungsteils am unteren Teil der Längsseitenfläche der Bohle 1, 2 anliegt.
b) Die Befestigungsteile 4 werden mit der Bohle 1, 2 durch Schrauben 6 verbunden, welche durch die Durchgangsbohrungen 4.6 hindurch in die Bohle 1, 2 verlaufen.
c) Die so mit Befestigungsteilen 4 verbundene Bohle 1, 2 wird an die Unterkonstruktion 3 aufgelegt und mit ihrer noch nicht mit Befestigungsteilen 4 versehenen Längsseitenfläche an eine zuvor auf der Unterkonstruktion 3 aufgelegte Bohle herangeschoben. Dabei sind an der schon vorher aufgelegten Bohle an jener Seite, an die die neu hinzukommende Bohle geschoben wird, Befestigungsteile 4 aufgesteckt und durch Schrauben 6 mit dieser zuvor aufgelegten Bohle verbunden. Die neu hinzukommende Bohle wird soweit an die schon vorher aufgelegte Bohle herangeschoben, dass die bis dahin frei gestandenen Seiten der Querstege 4.1 der mit der vorher aufgelegten Bohle verschraubten Befestigungsteile 4 in die Nut 2.1 an der neu hinzukommenden Bohle hineingleiten bis der untere Teil der Längsseitenfläche der neu hinzugekommenen Fläche am Fortsatz 4.4 der vorher schon aufgelegten Befestigungsteile 4 anliegt.
d) Die nun im Spalt zwischen zwei Bohlen befindlichen Befestigungsteile 4 werden durch Schrauben 5 welche durch ihre Durchgangsbohrungen 4.5 hindurch in die Unterkonstruktion hinein geschraubt werden, mit der Unterkonstruktion 3 verbunden.

Der besagte Fortsatz 4.4 steht bestimmungsgemäß in der Höhe des unteren Teils der Längsseitenfläche der Bohlen elastisch biegsam vom Verbindungssteg 4.2 des Befestigungsteils 4 zu jener Bohle hin weg, mit welcher der Befestigungsteil 4 nicht durch eine Schraube 6 verbunden wird. Er stellt einen nützlichen Anschlag bei der Montage dar, durch welchen die Position der jeweils neu hinzukommenden Bohlen in ihrer Position gut definiert wird. Durch seine elastische Biegsamkeit behindert er aber das Quellen und Schwinden der Bohlen in montiertem Zustand nicht.

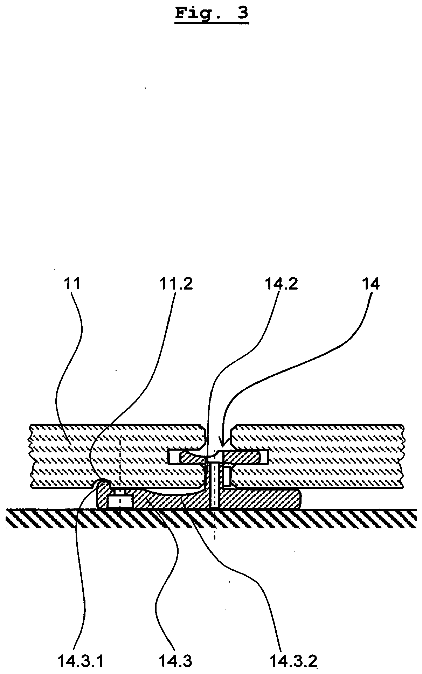

Bei der in Fig. 3 skizzierten Variante der erfindungsgemäßen Befestigung weisen die Bohlen 11 an ihrer Unterseite eine Nut 11.2 auf, in welche ein Fortsatz 14.3.1, welcher vom Fußteil 14.3 des Befestigungsteils 14 nach oben ragt, einrastet. Damit ist die Relativposition zwischen Befestigungsteil 14 und Bohle 11 in der zur Bohlenrichtung normalen Richtung in der Bodenebene auch ohne direkte Verbindungsschraube zwischen Bohle 11 und Befestigungsteil 14 definiert.

Idealerweise ist der Abstand zwischen der Nut 11.2 und dem unteren Teil der näheren Längsseitenfläche der Bohle 11 gleich oder ganz geringfügig größer als der Abstand zwischen dem Verbindungssteg 14.2 des Befestigungsteils 14 und dem Fortsatz 14.3.1, sodass ein Teil der Bohle 11 zwischen dem Verbindungssteg 14.2 und dem Fortsatz 14.3.1 eingeklemmt wird.

Damit die erforderliche elastische Verformbarkeit des Befestigungsteils 14 für das Aufstecken und Einrasten an der Bohle 11 erreicht wird, sollte der Fortsatz 14.3.1 an einem vom Verbindungssteg 14.2 möglichst weit entfernt liegenden Bereich des Bodenteils 14.3 liegen. Zusätzlich kann der Bodenteil 14.3 zwischen dem Fortsatz 14.3.1 und dem Verbindungssteg 14.2 mit einem Längsbereich 14.3.2 ausgeführt sein, in welchem die Dicke des Bodenteils 14.3 geringer ist als der Abstand zwischen Bohlen und Unterkonstruktion.

Die Befestigungsteile 4, 14 sind typischerweise Kunststoffspritzgussteile.

Indem sich die Verbindungsstelle zwischen Befestigungsteilen 4, 14 und Bohle 1, 11 an der Unterseite der Bohle 1, 11 befindet, ist sie optisch nicht störend und sie ist unkompliziert herzustellen.

Zwar ist für das Herstellen der Verbindungsstelle zwischen Befestigungsteilen 4, 14 und Unterseite der Bohle 1, 11 extra Montageaufwand erforderlich. Dieser Mehraufwand bei der Montage ist aber angesichts des Nutzens den man damit gegenüber ansonsten gleichen Befestigungen ohne diese Verbindungsstelle erzielt, durchaus gerechtfertigt. Diese Argumentation bezüglich Montage-Mehraufwand und damit erreichtem Nutzen gilt auch gegenüber jenen aus dem Stand der Technik bekannten Bauweisen bei denen das Quellen und Schwinden der Bohlen nur durch Veränderung der bei der Montage aufgebrachten elastischen Vorspannung der Befestigungsteile ausgeglichen werden muss.

## Patentansprüche

1. Verwendung von Befestigungsteilen (4, 14) zur Befestigung von Bohlen (1, 11, 2) an einer Unterkonstruktion (3), wobei jeder Befestigungsteil (4, 14) einen Verbindungssteg (4.2, 14.2), einen Bodenteil (4.3, 14.3), und einen vom Verbindungssteg beidseits abstehenden Quersteg (4.1) aufweist, wobei:
- der Verbindungssteg (4.2, 14.2) sich in einen Spalt zwischen benachbarten Bohlen (1, 11, 2) erstreckt,
- der Bodenteil (4.3, 14.3) sich in einen Spalt zwischen benachbarten Bohlen (1, 11, 2) einerseits und der Unterkonstruktion (3) anderseits erstreckt,
- der Quersteg (4.1) sich in jeweils eine Nut (1.1, 2.1) an den einander zugewandten Längsseitenflächen der benachbarten Bohlen (1, 2) erstreckt,
- wobei jeder Befestigungsteil (4, 14) durch eine Schraube (5), welche im Spalt zwischen den benachbarten Bohlen (1, 11, 2) durch den Verbindungssteg (4.2, 14.2) hindurch verläuft und mit der Unterkonstruktion (3) in Gewindeeingriff ist, an der Unterkonstruktion verankert ist, **dadurch gekennzeichnet, dass**
- sich eine Verbindungsstelle zwischen einem Befestigungsteil (4, 14) und einer (1) der beiden Bohlen (1, 11, 2) an welcher der Befestigungsteil (4, 14) anliegt an der Unterseite besagter Bohle (1) befindet wobei
- an dieser Verbindungsstelle Relativbewegung zwischen Bohle (1, 11) und Befestigungsteil (4, 14) parallel zur Bodenebene und quer zur Längsrichtung der Bohle (1, 11) blockiert ist,
- wobei sich keine Verbindungsstelle zwischen dem besagten Befestigungsteil (4, 14) und der anderen (2) der beiden Bohlen (1, 11, 2) an der Unterseite besagter Bohle (2) befindet.

2. Verwendung von Befestigungsteilen nach Anspruch 1, **dadurch gekennzeichnet, dass** die Verbindungsstelle gebildet ist, indem eine Schraube (6) durch eine Durchgangsbohrung (4.6) im Bodenteil (4.3, 14.3) des Befestigungsteils (4, 14) hindurch von unten her in die Bohle (1, 11) hinein verläuft.

3. Verwendung von Befestigungsteilen nach Anspruch 1 oder 2, **dadurch gekennzeichnet, dass** die Verbindungsstelle durch eine Rastverbindung zwischen einem Fortsatz (14.3.1) am Bodenteil (14.3) des Befestigungsteils (14) und einer Nut (11.2) an der Unterseite der Bohle (11) gebildet ist.

## Claims

1. Use of fastening parts (4, 14) for attaching planks (1, 11, 2) to a substructure (3), whereby each fastening part (4, 14) has a connecting web (4.2, 14.2), a bottom part (4.3, 14.3), and a stop ridge (4.1) protruding from the connecting web on both sides, whereby:
- the connecting web (4.2, 14.2) extends into a gap between adjacent planks (1, 11, 2),
- the bottom part (4.3, 14.3) extends into a gap between adjacent planks (1, 11, 2) on the one side and the substructure (3) on the other,
- the stop ridge (4.1) extends into a respective groove (1.1, 2.1) on the mutually facing longitudinal side faces of the adjacent planks (1, 2)
- whereby each fastening part (4, 14) is anchored at the substructure by means of a screw (5) which passes through the connecting web (4.2, 14.2) in the gap between the adjacent planks (1, 11, 2) and which is in threaded engagement with the substructure (3),
**characterised in that**
- a connection point is located between a fastening part (4, 14) and one (1) of the two planks (1, 11, 2) on which the fastening part (4, 14) abuts with the underside of said plank (1) whereby
- relative movement between the plank (1, 11) and the fastening part (4, 14) is blocked at this connection point parallel to the ground plane and transversely to the longitudinal direction of the plank (1, 11)
- whereby there is no connecting point between said fastening part (4, 14) and the other (2) of the two planks (1, 11, 2) on the underside of said plank (2).

2. The use of fastening parts pursuant to Claim 1, **characterised in that** the connecting point is formed by inserting a screw (6) through a through-hole (4.6) in the bottom part (4.3, 14.3) of the fastening part (4, 14) from beneath in the plank (1, 11).

3. Use of fastening parts pursuant to Claim 1 or Claim 2, **characterised in that** the connecting point is formed by a latching connection between an elongation (14.3.1) on the bottom part (14.3) of the fastening part (14) and a groove (11.2) on the underside of the plank (11).

## Revendications

1. Utilisation d'éléments de fixation (4, 14) pour la fixation de madriers (1, 11, 2) sur une sous-construction (3) où chaque élément de fixation (4, 14) présente une entretoise de liaison (4.2, 14.2), une pièce de fond (4.3, 14.3), et une patte transversale (4.1) faisant saillie des deux côtés de l'entretoise de liaison où :
- l'entretoise de liaison (4.2, 14.2) s'insère dans une fente entre les madriers adjacents (1, 11, 2),
- la pièce de fond (4.3, 14.3) s'insère dans une fente entre les madriers adjacents (1, 11, 2) d'une part et la sous-construction (3) d'autre part,
- la patte transversale (4.1) s'insère dans chaque encoche (1.1, 2.1) sur les surfaces latérales placées face à face des madriers adjacents (1, 2)
- où chaque élément de fixation (4, 14) est fixé sur la sous-construction par une vis (5) passant dans la fente entre les madriers adjacents (1, 11, 2) et traversant l'entretoise de fixation (4.2, 14.2) et qui est en prise vissée avec la sous-construction (3),
**caractérisée en ce**
- **qu'**une jonction est présente sur la face inférieure de l'un (1) des deux madriers (1, 11, 2) entre un élément de fixation (4, 14) et ledit madrier (1) sur lequel l'élément de fixation (4, 14) repose où
- sur cette jonction, le mouvement relatif entre le madrier (1, 11) et l'élément de fixation (4, 14) est parallèlement bloqué au niveau du sol et transversalement par rapport au sens longitudinal du madrier (1, 11)
- où aucune jonction n'est présente entre ledit élément de fixation (4, 14) et l'autre (2) des deux madriers (1, 11, 2) sur la face inférieure dudit madrier (2).

2. Utilisation de pièces de fixation selon la revendication 1 **caractérisée en ce que** la jonction est formée par le passage par le bas dans le madrier (1, 11) d'une vis (6) au travers d'un alésage débouchant (4.6) dans la pièce de fond (4.3, 14.3) de la pièce de fixation (4, 14).

3. Utilisation de pièces de fixation selon la revendication 1 ou 2 **caractérisée en ce que** l'élément de fixation est constitué par une liaison d'encliquetage entre un prolongement (14.3.1) sur la pièce de fond (14.3) de l'élément de fixation (14) et une rainure (11.2) sur la face inférieure du madrier (11).
